# EUROPÄISCHE PATENTSCHRIFT

(11) **EP 3 033 205 B1**
(45) Veröffentlichungstag und Bekanntmachung des Hinweises auf die Patenterteilung: **11.10.2017**
(21) Anmeldenummer: 14750733.9
(22) Anmeldetag: 13.08.2014
(51) Int. Cl.: B27D 5/00

(54) **BESCHICHTUNGSAGGREGAT**
COATING UNIT
UNITÉ DE REVÊTEMENT

(30) Priorität: 14.08.2013 DE 102013216113
(43) Veröffentlichungstag der Anmeldung: 22.06.2016
(73) Patentinhaber: HOMAG GmbH, 72296 Schopfloch (DE)
(72) Erfinder: GRINGEL, Martin, 72479 Strassberg (DE); SCHMID, Johannes, 72181 Starzach (DE)
(74) Vertreter: Hoffmann Eitle
(86) Internationale Anmeldenummer: PCT/EP2014/067328
(87) Internationale Veröffentlichungsnummer: WO 2015/022362

(56) Entgegenhaltungen:
- EP-A1- 0 743 139
- EP-A1- 2 243 619
- EP-A1- 2 397 287
- EP-A2- 2 332 718

## Beschreibung

### Technisches Gebiet

Die vorliegende Erfindung betrifft ein Beschichtungsaggregat zum Beschichten von insbesondere platten- oder leistenförmigen Werkstücken, die bevorzugt zumindest abschnittsweise aus Holz, Holzwerkstoffen, Kunststoff oder dergleichen bestehen, mit einem Beschichtungsmaterial.

### Stand der Technik

Im Bereich der Möbel- und Bauelementeindustrie müssen häufig Werkstücke im Bereich ihrer Schmal- oder Breitflächen mit einem Beschichtungsmaterial versehen werden, wenn die Werkstücke beispielsweise aus Holzwerkstoffen wie MDF, Spannplatte oder dergleichen bestehen. Meist werden die Beschichtungsmaterialien mit den Werkstückoberflächen verleimt, wobei sich weitere Fügetechniken entwickelt haben.

Eine verwendete Fügetechnik basiert auf dem Einsatz eines Schmelzklebers, bei der eine Aufschmelzeinheit einen Klebstoff aufschmilzt und im Allgemeinen mittels Leimauftragssystemen in Form von Walzen oder Düsen auf das Beschichtungsmaterial oder auf die zu beschichtende Werkstückoberfläche aufträgt. Diese Fügetechnik ist dabei vergleichsweise kostengünstig, führt jedoch zu einer sichtbaren Leimfuge, die in gewissen Anwendungsbereichen aus ästhetischen Gründen unerwünscht ist.

Neben der konventionellen Schmelzkleber-Fügetechnik ist die sogenannte Nullfugen-Fügetechnik bekannt. Bei dieser Nullfugentechnik wird die zu verklebende Fläche des Beschichtungsmaterials beziehungsweise die zu beschichtende Werkstückoberfläche mit einer Funktionsschicht versehen, die durch Energieeintrag haftende Eigenschaften entwickelt. Dabei wird die Funktionsschicht im Allgemeinen durch einen Laserstrahl, ein heißes Gas oder mittels sonstiger Strahlungsenergie aktiviert und im Anschluss daran wird das Beschichtungsmaterial an die zu beschichtende Werkstückfläche gefügt. Im Vergleich zur Schmelzkleber-Fügetechnologie weist die Nullfugentechnik normalerweise höhere Fertigungskosten auf, resultiert jedoch in einer sehr hochwertigen Beschichtung mit einer deutlich höheren Haftkraft, einer verbesserten Feuchtebeständigkeit und einer optischen Nullfuge zwischen Kante und Platte.

Ferner ist die EP 2 243 619 A1 bekannt, die eine Vorrichtung und ein Verfahren zum Beschichten von Werkstücken zeigt, die dadurch gekennzeichnet sind, dass zumindest eine zweite Fügeeinrichtung zum Aufbringen und/oder Aktivieren eines Haftmittels auf einem in der Zuführeinrichtung zugeführten Beschichtungsmaterial und/oder einer zu beschichtenden Oberfläche eines Werkstücks vorhanden ist.

Als weiteres Dokument ist die EP 0 743 139 A1 bekannt, die ein Bearbeitungszentrum mit einer Spindeleinheit zur Aufnahme von Bearbeitungswerkzeugen und Bearbeitungsaggregaten für Holz- und Kunststoff-Werkstoffe zeigt.

Die EP 2 397 287 A1 zeigt ein einwechselbares Beschichtungsaggregat mit einem Generator für die Erzeugung elektrischer Energie, einem Mittel, das mittels des Generators mit Energie versorgt wird, zum Erwärmen von Beschichtungsmaterial, einer insbesondere lösbaren Drehmomentschnittstelle zum Übertragen des Drehmoments von außen zum Beschichtungsaggregat, wobei der Generator eingerichtet ist, mittels des Drehmoments angetrieben zu werden.

Die aus dem Stand der Technik bekannten Aggregate und Vorrichtungen weisen jedoch den Nachteil auf, dass dem Anwender auf einer Maschine lediglich eine Fügetechnologie, zum Beispiel die Schmelzklebertechnologie oder die Nullfugentechnologie, bereitgestellt werden kann. Dabei ist die Schmelzklebertechnologie nach wie vor das kostengünstigste Beschichtungsverfahren, wobei die Nullfugentechnologie höchste Qualitätsanforderung erfüllt. Um eine hohe Bearbeitungsvielfalt zu ermöglichen, ist es heutzutage daher erforderlich, zwei Maschinen, nämlich eine für die konventionelle Schmelzklebertechnologien und eine weitere für die neue Nullfugentechnologie vorzusehen.

### Darstellung der Erfindung

Es ist daher Aufgabe der vorliegenden Erfindung, ein flexibles Beschichtungsaggregat bereitzustellen, mit dem verschiedene Beschichtungstechnologien umgesetzt werden können.

Die Lösung der Aufgabe erfolgt durch das Aggregat des Patentanspruchs 1. Bevorzugte Ausgestaltungen ergeben sich aus den Unteransprüchen.

Der Erfindung liegt der Gedanke zugrunde, dass die Bereitstellung von verschiedenen Beschichtungstechnologien auf einem Beschichtungsaggregat auf einfache, kostengünstige und platzsparende Weise dann möglich ist, wenn eine technologiespezifische Einrichtung einwechselbar ausgestaltet ist, und jene, die für alle Fügetechnologien erforderlich ist, bereits an dem Aggregat vorgesehen ist. So lässt sich beispielsweise zum Fügen eines Beschichtungsmaterials mittels Schmelzklebetechnologie eine schmelzkleberspezifische Fügemittelaufbereitungseinrichtung bereitstellen, die bei Forderung eines Fügens mittels Nullfugentechnologie durch eine beispielsweise laserstrahlspezifische Fügemittelaufbereitungseinrichtung ausgetauscht werden kann.

Die verschiedenen Fügetechnologien basieren auf verschiedenen Energieformen, sodass beispielsweise die Schmelzklebertechnologie auf thermischer Energie basiert, die zum Aufschmelzen eines Schmelzklebers erforderlich ist, während die Nullfugentechnologie beispielsweise auf elektromagnetischer Energie basiert, die zum Aktivieren einer Funktionsschicht mittels elektromagnetischer Strahlung erforderlich ist.

Erfindungsgemäß wird das im Stand der Technik vorhandene Problem daher dadurch gelöst, dass ein Beschichtungsaggregat bereitgestellt wird, welches eine Schnittstelle zur Aufnahme und Energieversorgung einer einwechselbaren Fügemittelaufbereitungseinrichtung und eine an diese Schnittstelle ankoppelbare einwechselbare Fügemittelaufbereitungseinrichtung aufweist. Dabei umfasst die Fügemittelaufbereitungseinrichtung eine Energiewandlungseinrichtung zum Wandeln der über die Schnittstelle bereitgestellten Energie zur Aufbereitung eines Fügemittels zum Fügen des Beschichtungsmaterials an die zu beschichtende Oberfläche des Werkstücks, wobei das Aggregat eine zweite Schnittstelle zur Aufnahme und Energieversorgung einer einwechselbaren Fügemittelaufbereitungseinrichtung aufweist.

Das Fügemittel kann beispielsweise ein Schmelzkleber sein, wobei die Aufbereitung beispielsweise dann auf ein Aufschmelzen des Schmelzklebers abzielt. Ebenso kann das Fügemittel eine Funktionsschicht sein, die beispielsweise mittels eines Laserstrahls oder eines Heißgases aktiviert wird, also zum Fügen des Beschichtungsmaterials aufbereitet wird.

Die Schnittstelle stellt dabei bevorzugt elektrische Energie bereit, welche über eine Energiewandlungseinrichtung, die auf der jeweiligen Fügemittelaufbereitungseinrichtung selbst vorgesehen ist, in eine für die Fügetechnologie erforderliche Energieform gewandelt wird. So wird beispielsweise die elektrische Energie, welche über die Schnittstelle der einwechselbaren Fügemittelaufbereitungseinrichtung zugeführt wird, mit der Energiewandlungseinrichtung für die laserbasierte Nullfugentechnologie, die auf der Fügemittelaufbereitungseinrichtung selbst vorgesehen ist, in elektromagnetische Energie, nämlich einen Laserstrahl, zum Aktivieren einer Funktionsschicht gewandelt. Die Energiewandlungseinrichtung eines Schmelzklebeaggregats kann hingegen beispielsweise die elektrische Energie, welche über die Schnittstelle bereitgestellt wird, auf der Fügemittelaufbereitungseinrichtung selbst, in thermische Energie zum Schmelzen eines Klebstoffs wandeln.

Das erfindungsgemäße Beschichtungsaggregat ermöglicht somit ein Bereitstellen von verschiedenen Fügetechnologien auf einem Aggregat. Dies ermöglicht eine hohe Bearbeitungsvariabilität mit insgesamt entsprechend geringen Systemkosten. Ferner führt die erfindungsgemäße Ausgestaltung zu einem schlanken und kompakten System und insbesondere einer einfach ausgestalteten Schnittstelle, da die für die jeweiligen Fügetechnologien spezifischen Einrichtungen auf den entsprechenden Fügemittelaufbereitungseinrichtungen selbst vorgesehen sind. Somit ist es beispielsweise nicht erforderlich, dass all die unterschiedlichen Energieformen, die für die verschiedenen Fügetechnologien erforderlich sind, über die Schnittstelle bereitgestellt werden müssen. Ferner ermöglicht das erfindungsgemäße Beschichtungsaggregat eine beliebige Erweiterbarkeit, da die universell ausgestaltete Schnittstelle auch die Aufnahme von Fügemittelaufbereitungseinrichtungen mit erst in Zukunft entwickelten Fügetechnologien ermöglicht.

Ferner können durch das Vorsehen einer zweiten Schnittstelle gleichzeitig zwei verschiedene Fügetechnologien auf einem Aggregat ohne Rüstvorgang bereitgestellt werden. Dies ermöglicht eine erhöhte Bearbeitungseffizienz und damit geringere Stückkosten. Ferner ermöglicht die zweite Schnittstelle eine höhere Maschinenstandzeit, da beispielsweise bei einem Defekt der ersten Schnittstelle, die erste Fügemittelaufbereitungseinrichtung auf die zweite Schnittstelle umgerüstet werden kann und es somit nicht zu einem Maschinenausfall kommt.

In einer bevorzugten Ausgestaltung kann das Beschichtungsaggregat auch eine zweite mit der ersten und/oder zweiten Schnittstelle verbindbare einwechselbare Fügemittelaufbereitungseinrichtung aufweisen, die eine Energiewandlungseinrichtung zum Wandeln der über die Schnittstelle bereitgestellten Energie zur Aufbereitung eines Fügemittels zum Fügen des Beschichtungsmaterials an die zu beschichtende Oberfläche des Werkstücks umfasst. Dies führt zu dem Vorteil, dass verschiedene Fügetechnologien auf einer Maschine bereitgestellt werden können und/oder eine Fügemittelaufbereitungseinrichtung gewartet werden kann, während eine entsprechende in die Maschine einwechselbar ist. Dies ermöglicht eine erhöhte Bearbeitungsvariabilität beziehungsweise eine erhöhte Maschinenstandzeit.

Bevorzugt weist eine Fügemittelaufbereitungseinrichtung ein Haftmittelbehältnis zur Aufnahme eines Haftmittels und eine Auftragseinrichtung zum Auftragen des Haftmittels auf das Beschichtungsmaterial und/oder die zu beschichtende Oberfläche des Werkstücks auf. Ferner ist das Bearbeitungsaggregat bevorzugt eingerichtet, das Haftmittel vor dem Auftragen mittels der Energiewandlungseinrichtung der Fügemittelaufbereitungseinrichtung zu aktivieren. Erfindungsgemäß wird unter einer Aktivierung eines Fügemittels ein Prozess verstanden, der dazu führt, dass das Fügemittel haftende Eigenschaften entwickelt. Ein erfindungsgemäßes Aktivieren kann somit beispielsweise das Aufschmelzen bzw. Verflüssigen eines Klebstoffs und/oder das Anregen einer Funktionsschicht mit einem Laserstrahl sein. Diese Ausgestaltung des Fügeaggregats ermöglicht dabei das Bereitstellen der kostengünstig einsetzbaren Schmelzklebetechnologie auf dem Beschichtungsaggregat.

Eine Fügemittelaufbereitungseinrichtung kann eingerichtet sein, eine durch Energieeintrag aktivierbare Funktionsschicht zum Fügen des Beschichtungsmaterials an die zu beschichtende Oberfläche des Werkstücks zu aktivieren. Eine so ausgestaltete Fügemittelaufbereitungseinrichtung ermöglicht dabei das Bereitstellen der zuvor beschriebenen Nullfugenfügetechnologie auf dem Beschichtungsaggregat. Dabei wird die durch Energieeintrag aktivierbare Funktionsschicht entweder dem Fügebereich zwischen Beschichtungsmaterial und zu beschichtender Oberfläche des Werkstücks zugeführt oder ist auf der Oberfläche des zu beschichtenden Werkstücks beziehungsweise auf dem Beschichtungsmaterial vorgesehen.

Gemäß einer Ausführungsform weist die Energiewandlungseinrichtung der ersten Fügemittelaufbereitungseinrichtung und/oder ggf. der zweiten Fügemittelaufbereitungseinrichtung mindestens eine Laserdiode zur Erzeugung eines Laserstrahls auf. Bevorzugt weist die Energiewandlungseinrichtung ferner eine Strahlführungs-und/oder Strahlformungseinrichtung für den Laserstrahl auf. Die Laserdiode zur Erzeugung eines Laserstrahls ermöglicht dabei eine effektive Aktivierung eines Schmelzklebers und/oder einer Funktionsschicht mittels eines Laserstrahls. Die erfindungsgemäße Ausgestaltung, bei welcher die Laserdiode auf der Fügemittelaufbereitungseinrichtung selbst vorgesehen ist, umgeht ferner das Erfordernis, aufwendige und kostenintensive Strahlführungssysteme sowie eine komplexe Schnittstelle vorzusehen, um den Laserstrahl dem Aktivierungsbereich zuzuführen.

Gemäß einer Ausführungsform weist die Energiewandlungseinrichtung der ersten Fügemittelaufbereitungseinrichtung und/oder zweiten Fügemittelaufbereitungseinrichtung ein Heizsystem zur Erzeugung eines Heißgases auf. Bevorzugt weist die Energiewandlungseinrichtung ferner eine Düseneinrichtung zum Applizieren des Heißgases auf beispielsweise das Beschichtungsmaterial und/oder die zu beschichtende Oberfläche auf. Ebenso kann das Heißgas verwendet werden, um das Beschichtungsmaterial und/oder die zu beschichtende Werkstückoberfläche vorzuwärmen. Das Heißgas stellt dabei eine vergleichsweise kostengünstige Energieform dar. Die Energiewandlungseinrichtung kann dabei Anschlüsse für die Gasversorgung aufweisen, die beispielsweise auf deren Oberseite angeordnet sind. Es ist jedoch auch denkbar, dass die Gasversorgung über die Schnittstelle des Aggregats stattfindet.

Gemäß einer weiteren Ausführungsform weist das Beschichtungsaggregat ein Andrückelement zum Andrücken des Beschichtungsmaterials an die zu beschichtende Oberfläche des Werkstücks auf. Solch eine Ausgestaltung führt zu einem Beschichtungsaggregat mit einer geringen Komplexität und einer erhöhten energetischen Effizienz, da das Andrückelement in unmittelbarer Nähe der Energiewandlungseinrichtung der jeweiligen Fügemittelaufbereitungseinrichtung vorgesehen ist. Somit kann das Beschichtungsmaterial direkt angrenzend an den Ort, an welchem ein Fügemittel, zum Beispiel ein Schmelzkleber, auf dem Beschichtungsmaterial vorgesehen wird, oder eine Funktionsschicht aktiviert wird, mit der zu beschichtenden Oberfläche gefügt werden. Auf diese Weise kann ein Abkühlen bzw. Antrocknen des Fügemittels vermieden oder zumindest minimiert werden.

Bevorzugt weist das Beschichtungsaggregat eine Aggregatschnittstelle zum einwechselbaren Ankoppeln des Aggregats an eine Beschichtungsmaschine auf. Solch eine Ausgestaltung des Aggregats ermöglicht dabei, dass dieses beispielsweise mit bestehenden Beschichtungsvorrichtungen verbunden werden kann. Ferner wird eine leichte Aggregatswartung und Austauschbarkeit gewährleistet.

Ferner stellt die vorliegende Erfindung eine Beschichtungsvorrichtung mit einem zuvor beschriebenen Beschichtungsaggregat bereit. Die Vorrichtung weist dabei ferner eine Zuführeinrichtung zum Zuführen eines Beschichtungsmaterials zu der zu beschichtenden Oberfläche des Werkstücks, ein Andrückelement zum Andrücken des Beschichtungsmaterials an die zu beschichtenden Oberfläche des Werkstücks und eine Fördereinrichtung zum Herbeiführen einer Relativbewegung zwischen dem Andrückelement und der zu beschichtenden Oberfläche des Werkstücks auf. Das Andrückelement der Vorrichtung kann dabei auch an dem Beschichtungsaggregat vorgesehen sein.

Gemäß einer Ausführungsform weist die Vorrichtung eine Wechseleinrichtung zum Rüsten des Beschichtungsaggregats auf die erste und/oder zweite Fügemittelaufbereitungseinrichtung und/oder zum Umrüsten der Vorrichtung auf eine andere Fügemittelaufbereitungseinrichtung auf. Es wird darauf hingewiesen, dass die Wechseleinrichtung auch Teil des Beschichtungsaggregats sein kann. Mittels der Wechseleinrichtung lässt sich der Rüst- beziehungsweise Umrüstvorgang automatisieren und damit die Effizienz der Beschichtungsvorrichtung bzw. des Beschichtungsaggregats steigern. Dies führt zu geringeren Fertigungszeiten und damit einem erhöhten Output, was wiederum in geringeren Stückkosten resultiert.

### Kurze Beschreibung der Zeichnungen

Fig. 1 zeigt eine Seitenansicht des Beschichtungsaggregats einer ersten nicht erfindungsgemäßen Ausführungsform.
Fig. 2 zeigt eine Draufsicht des Beschichtungsaggregats der ersten Ausführungsform.
Fig. 3 zeigt eine Seitenansicht des Beschichtungsaggregats einer zweiten nicht erfindungsgemäßen Ausführungsform.
Fig. 4 zeigt eine Draufsicht des Beschichtungsaggregats der zweiten Ausführungsform.
Fig. 5 zeigt eine Seitenansicht des Beschichtungsaggregats einer dritten nicht erfindungsgemäßen Ausführungsform.
Fig. 6 zeigt eine Draufsicht des Beschichtungsaggregats der dritten Ausführungsform.
Fig. 7 zeigt eine Seitenansicht des Beschichtungsaggregats einer ersten Ausführungsform der vorliegenden Erfindung.
Fig. 8 zeigt eine Draufsicht des Beschichtungsaggregats der ersten Ausführungsform der vorliegenden Erfindung.
Fig. 9 zeigt eine Seitenansicht des Beschichtungsaggregats einer zweiten Ausführungsform der vorliegenden Erfindung.
Fig. 10 zeigt eine Draufsicht des Beschichtungsaggregats der zweiten Ausführungsform der vorliegenden Erfindung.
Fig. 11 zeigt eine Seitenansicht des Beschichtungsaggregats einer dritten Ausführungsform der vorliegenden Erfindung.
Fig. 12 zeigt eine Draufsicht des Beschichtungsaggregats der dritten Ausführungsform der vorliegenden Erfindung.

Detaillierte Beschreibung der Ausführungsformen Ausführungsformen werden nachfolgend unter Bezugnahme auf die begleitenden Zeichnungen beschrieben. Weitere Varianten und Modifikationen können jeweils miteinander kombiniert werden, um weitere Ausführungsformen auszubilden.

Die nachfolgend beschriebenen Ausführungsformen des Beschichtungsaggregats dienen dem Beschichten von insbesondere Werkstückschmalseiten mit einem Beschichtungsmaterial. Die Werkstücke bestehen dabei zumindest abschnittsweise aus Holz, Holzwerkstoffen, Kunststoff oder dergleichen, wie sie beispielsweise im Bereich der Möbel- und Bauelementeindustrie zum Einsatz kommen. Dabei kann es sich beispielsweise um Massivholz- oder Spannplatten, Leichtbauplatten, Sandwichplatten, oder dergleichen handeln.

Das Beschichtungsmaterial ist bevorzugt ein Kantenband, welches aus unterschiedlichen Materialien, wie beispielsweise Kunststofffurnier, Papier, Pappe, Metall etc. und vielfältigen Kombinationen hiervon, bestehen kann. Dabei wird das Beschichtungsmaterial bevorzugt in einer Rollenform vorgesehen, kann aber beispielsweise auch in Form von Einzelabschnitten bereitgestellt werden. Ferner kann das Beschichtungsmaterial eine Funktionsschicht aufweisen, die durch Energieeintrag (beispielsweise Erwärmung oder Laserstrahlung) haftende Eigenschaften entfaltet, sodass das Beschichtungsmaterial an ein Werkstück über die Funktionsschicht gefügt werden kann. Dabei kann die Funktionsschicht Mittel zur Erhöhung der Wärmeleitfähigkeit, wie beispielsweise Polyolefine und/oder Metallpartikel aufweisen. Ferner kann die Funktionsschicht Absorber für Laserlicht oder andere Strahlungsquellen aufweisen. Alternativ kann die Funktionsschicht auch separat zwischen Beschichtungsmaterial und Werkstück zugeführt werden, oder bereits auf der zu beschichtenden Oberfläche des Werkstücks vorgesehen sein.

### Erste Ausführungsform

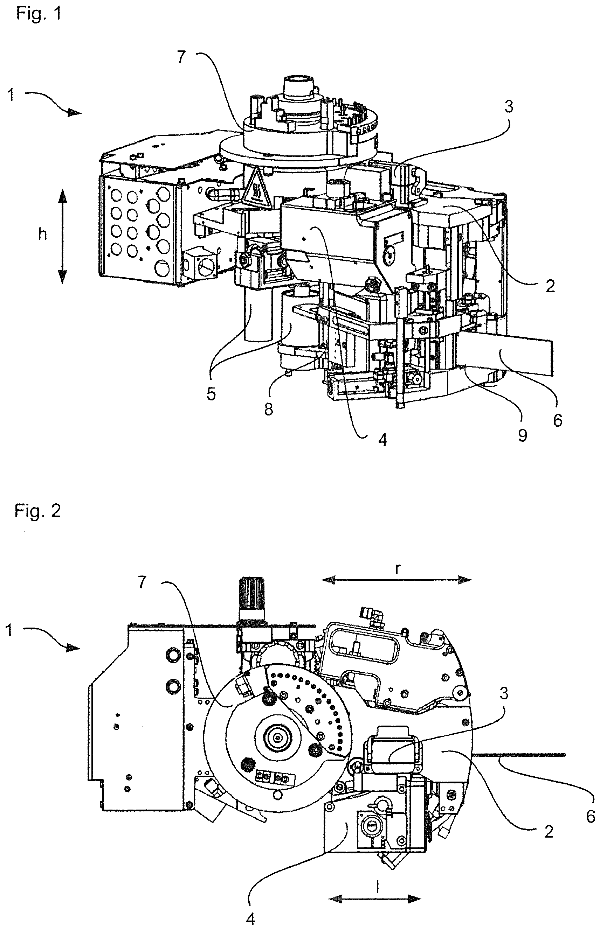

Im Folgenden wird eine erste Ausführungsform eines Beschichtungsaggregats 1 unter Bezugnahme auf die Figs. 1 und 2 detailliert beschrieben. Das Beschichtungsaggregat 1 weist einen Einrichtungsträger 2 mit einer Schnittstelle 3 zur Aufnahme und Energieversorgung einer einwechselbaren Fügemittelaufbereitungseinrichtung 4, Andrückrollen 5 zum Andrücken des Beschichtungsmaterials 6, hier eines Kantenbands, an die zu beschichtende Schmalfläche des Werkstücks und eine Beschichtungsaggregatschnittstelle 7 auf.

Die Beschichtungsaggregatschnittstelle 7 ermöglicht eine Ankopplung des Beschichtungsaggregats 1 an eine nicht gezeigte Beschichtungsmaschine. Die Beschichtungsaggregatschnittstelle 7 weist dabei bevorzugt Anschlüsse zur elektrischen Energieversorgung des Aggregats 1 auf. Ebenso ist es möglich, dass die Schnittstelle 7 Anschlüsse zur Versorgung des Beschichtungsaggregat 1 mit Druckluft, Kühlmittel etc. und/oder Anschlüsse zur Steuerung/Regelung des Beschichtungsaggregats 1 umfasst.

Dabei ist in der vorliegenden Ausführungsform das Beschichtungsaggregat 1 um die Beschichtungsaggregatschnittstelle 7 herum und in der Höhenstreckungsrichtung h des Aggregats 1 unterhalb der Schnittstelle 7 aufgebaut.

Der Einrichtungsträger 2 erstreckt sich in dieser bevorzugten Ausführungsform entlang etwa 90 Grad um die Beschichtungsaggregatschnittstelle 7 und weist eine radiale Ausdehnung auf, die in etwa zwei Mal dem maximalen Durchmesser der Beschichtungsaggregatschnittstelle 7 entspricht. Der Einrichtungsträger 2 weist ferner einen Kanteneinlauf 9 auf, der in dessen Umfangsausedehnung in dieser bevorzugten Ausführungsform in etwa auf der Mitte, in Höhenerstreckungsrichtung h am unteren Ende sowie um äußeren Umfang des Trägers 2 angeordnet ist. Ferner umfasst der Einrichtungsträger 2 bevorzugt zwei Andrückrollen 5, die in Höhenstreckungsrichtung h am unteren Ende des Einrichtungsträger 2 und in radialer Richtung im Bereich der Beschichtungsaggregatschnittstelle 7 angeordnet sind. Bevorzugt sind die Andrückrollen 5 dabei auf etwa gleicher Höhe wie der Kanteneinlauf 9 angeordnet. Dabei sind auch nur eine Andrückrolle oder mehr als zwei Andrückrollen denkbar. Ebenso ist beispielsweise ein Andrückschuh oder ein sonstiges Andrückelement vorstellbar, mit dem das Beschichtungsmaterial 6 an die zu beschichtende Werkstückoberfläche angedrückt werden kann. Auch ein verstellbares und/oder regelbares Andrückelement, mit dem der Andrückdruck anpassbar ist, wäre hier möglich.

Darüber hinaus weist der Einrichtungsträger 2 die Schnittstelle 3 zur Aufnahme und Energieversorgung der Fügemittelaufbereitungseinrichtung 4 auf. Dabei ist die Schnittstelle 3 bevorzugt außerhalb des Bereichs der Beschichtungsaggregatschnittstelle 7 vorgesehen, sodass die An- bzw. Abkopplung der Einrichtung 4 nicht durch diese behindert wird. Bevorzugt ist die Schnittstelle 3 auf etwa der Hälfte der radialen Ausdehnung des Trägers 2 und/oder in Umfangserstreckungsrichtung des Trägers 2 auf Höhe des Kanteneinlaufs 9 angeordnet. Die Schnittstelle 3 ist dabei so ausgestaltet, dass die Fügemittelaufbereitungseinrichtung 4 in diese einwechselbar und damit an das Beschichtungsaggregat 1 ankoppelbar ist. Diese Ankopplung erfolgt dabei bevorzugt über eine Relativverschiebung von Schnittstelle 3 und Einrichtung 4, sodass die Einrichtung 4 durch Verschieben in die Höhenerstreckungsrichtung h des Beschichtungsaggregats 1 in die Schnittstelle 3 eingewechselt werden kann. Die Abkopplung der Fügemittelaufbereitungseinrichtung 4 von der Schnittstelle 3 erfolgt bevorzugt durch eine entsprechende Relativverschiebung der Teile in die entgegengesetzte Richtung. Die Schnittstelle 3 weist bevorzugt Anschlüsse zur elektrischen Energieversorgung einer angekoppelten Fügemittelaufbereitungseinrichtung 4 auf. Auch kann diese Anschlüsse zur Druckluft- bzw. Heißluftversorgung oder Versorgung einer angekoppelten Einrichtung 4 mit elektromagnetischer Energie, Laserstrahlung oder sonstigen Energieformen umfassen. Auch Anschlüsse zur Steuerung/Regelung der Einrichtung 4 oder sonstige Anschlüsse sind denkbar. Bevorzugt sind die Anschlüsse der Schnittstelle 3 dabei nicht einrichtungsspezifisch ausgestaltet, sondern für jegliche Fügemittelaufbereitungseinrichtungen 4, die zur Ankopplung an die Schnittstelle 3 geeignet und insbesondere ausgestaltet sind, verwendbar.

Die einwechselbar Fügemittelaufbereitungseinrichtung 4, die über die Schnittstelle 3 an das Beschichtungsaggregat 1 an- bzw. abkoppelbar ist, dient dem Aufbereiten eines Fügemittels, welches zum Fügen des Beschichtungsmaterials 6 an die zu beschichtende Oberfläche des Werkstücks erforderlich ist. Dabei weist die Einrichtung 4 eine Längsausdehnung 1 auf, die in der gleichen Größenordnung liegt, wie die radiale Ausdehnung r des Trägers 2. Die Aufbereitung des Fügemittels erfolgt dabei über eine nicht gezeigte Energiewandlungseinrichtung, welche die über die Schnittstelle 3 bereitgestellte elektrische Energie in eine Energieform wandelt, die zur Aufbereitung des Fügemittels erforderlich ist. In dieser ersten bevorzugten Ausführungsform ist die Einrichtung 4 ausgestaltet, die sogenannte "Schmelzkleber-Fügetechnologie" bereitzustellen. Dabei weist die Energiewandlungseinrichtung der Fügemittelaufbereitungseinrichtung 4 eine nicht gezeigte Heizeinrichtung zum Wandeln der elektrischen Energie, die über die Schnittstelle 3 bereitgestellt wird, in thermische Energie auf, um einen Schmelzklebers zu verflüssigen. Die Fügemittelaufbereitungseinrichtung 4 weist ferner eine Schmelzkleberaustrittsöffnung 8 auf, die im angekoppelten Zustand der Einrichtung 4 in etwa auf Höhe der Andrückrollen 5 und des Kanteneinlaufs 9 des Beschichtungsaggregats 1 angeordnet ist. Dabei ist die Öffnung 8 so ausgestaltet und orientiert, dass über diese der verflüssigte Schmelzkleber auf ein Kantenband 6, welches dem Beschichtungsaggregat 1 über den Kanteneinlauf 9 zugeführt wird, aufgetragen werden kann. Ebenso ist hier eine Ausgestaltung und Orientierung der Schmelzkleberaustrittsöffnung denkbar, mit welcher der Schmelzkleber auf die zu beschichtende Oberfläche des Werkstücks auftragbar ist.

### Zweite Ausführungsform

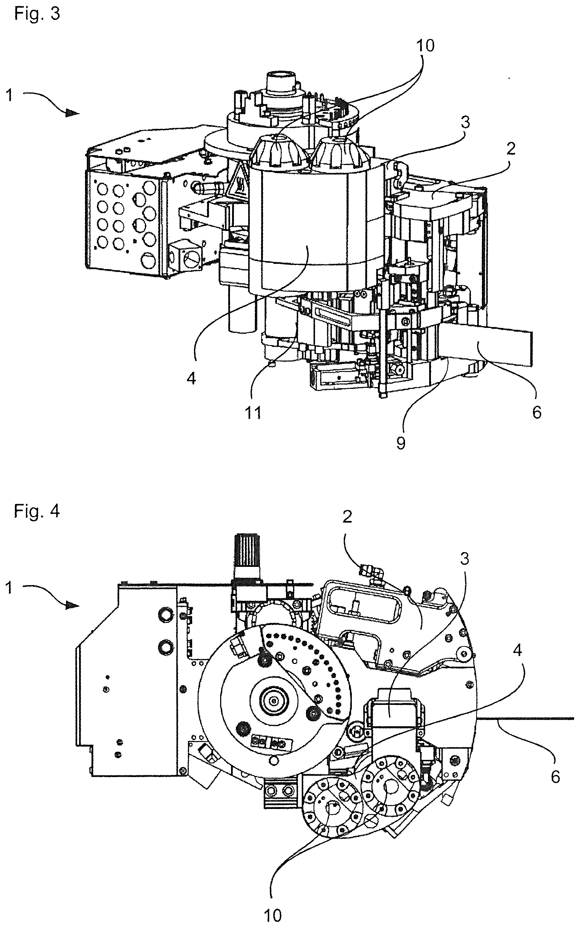

Figs. 3 und 4 zeigen eine zweite Ausführungsform. Diese zweite Ausführungsform weist dabei mit Ausnahme der im Folgenden beschriebenen Unterschiede eine identische Ausgestaltung zur ersten Ausführungsform auf.

Die zweite Ausführungsform unterscheidet sich von der ersten Ausführungsform dadurch, dass die Fügemittelaufbereitungseinrichtung 4 ausgestaltet ist, die "Heißgas-Fügetechnologie" bereitzustellen. Dafür weist die Einrichtung 4 zwei Gaszuführanschlüsse 10 auf, die in der vorliegenden Ausführungsform an der Oberseite vorgesehen sind. Hier sei darauf hingewiesen, dass diese Anschlüsse beliebig angeordnet werden können, oder auch eine Gaszufuhr über die Schnittstelle 3 des Einrichtungsträgers 2 denkbar ist. In dieser zweiten bevorzugten Ausführungsform weist die nicht gezeigte Energiewandlungseinrichtung der Fügemittelaufbereitungseinrichtung 4 ein Heizsystem auf, mit dem das über die Gaszuführanschlüsse 10 zugeführte Gas, erwärmt wird. Das Heizsystem der Energiewandlungseinrichtung wird dabei über die Schnittstelle 3 mit elektrischer Energie versorgt. Bei dem zugeführten Gas kann es sich um ein Gas mit einem Überdruck von insbesondere mehreren Bar gegenüber der Umgebung handeln. Ferner weist die Fügemittelaufbereitungseinrichtung 4 der zweiten Ausführungsform einen Heißgasaustritt 11 auf, der im angekoppelten Zustand der Einrichtung 4 in etwa auf Höhe der Andrückrollen 5 und des Kanteneinlaufs 9 angeordnet ist. Dabei ist der Heißgasaustritt 11 so ausgestaltet und orientiert, dass ein Kantenband 6, welches bevorzugt eine Funktionsschicht aufweist, die durch Energieeintrag haftende Eigenschaften entwickelt, mittels des Heizgases, welches aus dem Austritt 11 austritt, aufbereitet bzw. aktiviert werden kann. Der Heißgasaustritt 11 kann dabei auch so ausgestaltet und orientiert sein, dass mit diesem eine Funktionsschicht auf dem Werkstück und/oder eine dem Fügebereich separat zugeführte Funktionsschicht aufbereitet und/oder aktiviert werden kann.

### Dritte Ausführungsform

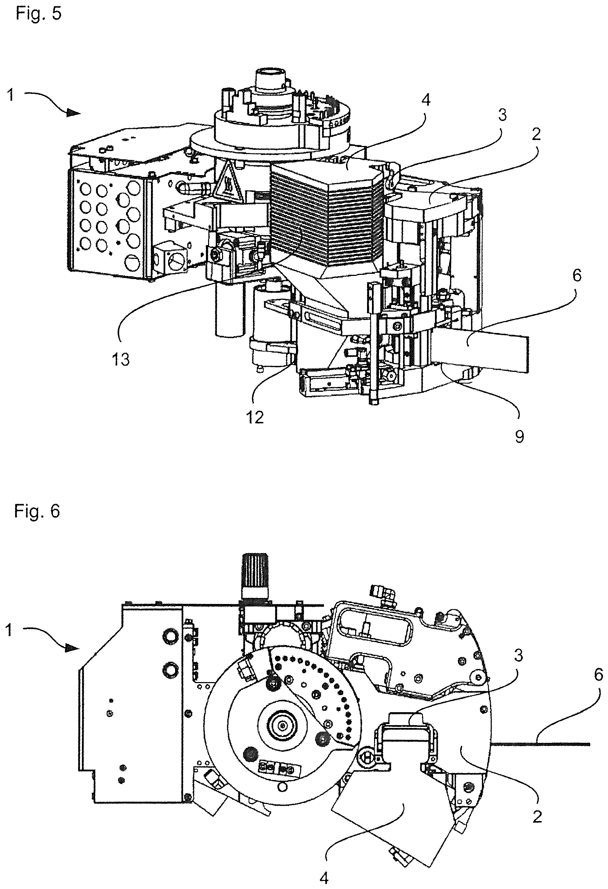

Figs. 5 und 6 zeigen eine dritte Ausführungsform. Diese dritte Ausführungsform weist dabei mit Ausnahme der im Folgenden beschriebenen Unterschiede eine identische Ausgestaltung zur ersten Ausführungsform auf.

Im Unterschied zu der ersten Ausführungsform, weist die dritte Ausführungsform eine Fügemittelaufbereitungseinrichtung 4 auf, die ausgestaltet ist, die "Laser-Fügetechnologie" bereitzustellen. Die Einrichtung 4 dieser dritten bevorzugten Ausführungsform weist dabei eine nicht gezeigte Energiewandlungseinrichtung auf, die eine Laserdiode umfasst. Mittels dieser Energiewandlungseinrichtung wird dabei die über die Schnittstelle 3 bereitgestellte Energie in elektromagnetische Strahlung in Form eines Laserstrahls gewandelt. Hier sei darauf hingewiesen, dass die Energiewandlungseinrichtung auch mehrere Laserdioden aufweisen kann. Ferner umfasst die Fügemittelaufbereitungseinrichtung 4 einen Strahlenaustritt 12, welcher im angekoppelten Zustand der Einrichtung 4 in etwa auf Höhe der Andrückrollen 5 sowie des Kanteneinlaufs 9 angeordnet ist. Der Strahlenaustritt 12 ist dabei so ausgestaltet und orientiert, das mit dem Laserstrahl, der aus diesem austritt, eine Funktionsschicht auf dem Kantenband 6, welches dem Beschichtungsaggregat 1 über den Kanteneinlauf 9 zugeführt wird, aufbereitet bzw. aktiviert werden kann. Auch eine Ausgestaltung und Orientierung zur Aktivierung einer Funktionsschicht auf einer zu beschichtenden Oberfläche und/oder einer Funktionsschicht die dem Fügebereich separat zugeführt wird ist denkbar.

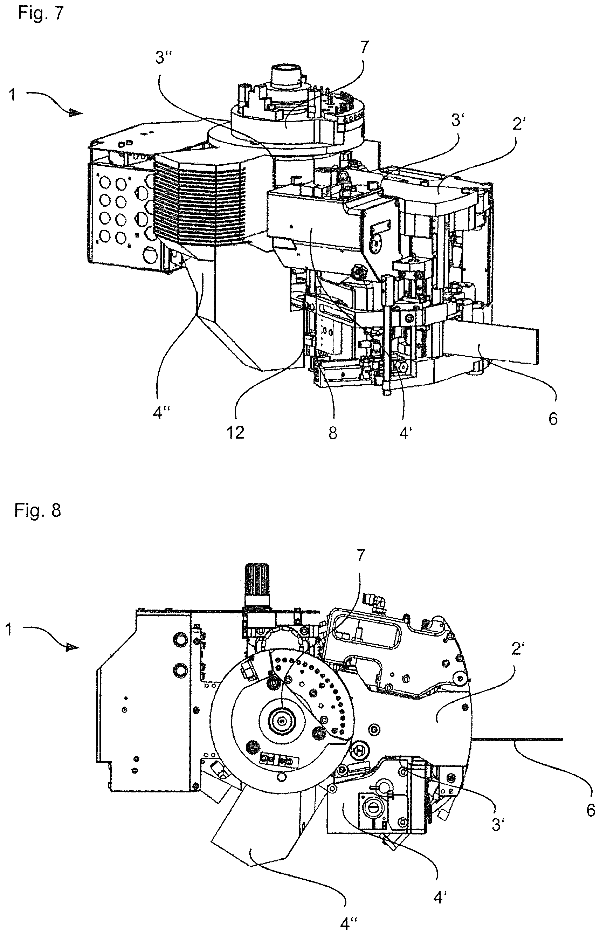

Darüber hinaus weist die Einrichtung 4 Kühlrippen 13 auf, die zur passiven Kühlung der Einrichtung 4 ausgestaltet sind. Hier sei darauf hingewiesen, dass auch eine aktive Kühlung der Einrichtung 4 über ein Kühlmittel denkbar ist. Dieses kann über Anschlüsse an der Einrichtung 4 und/oder aber auch über entsprechende Anschlüsse über die Schnittstelle 3 des Einrichtungsträgers 2 der Fügemittelaufbereitungseinrichtung 4 zugeführt werden. Erste bevorzugte Ausführungsform Figs. 7 und 8 zeigen eine erste bevorzugte Ausführungsform der vorliegenden Erfindung. Diese erste bevorzugte Ausführungsform weist dabei mit Ausnahme der im Folgenden beschriebenen Unterschiede eine identische Ausgestaltung zur ersten nicht erfinderischen Ausführungsform auf.

Gemäß der ersten bevorzugten Ausführungsform werden auf dem Beschichtungsaggregat 1 zwei verschiedene Fügetechnologien bereitgestellt. Dabei weist der Einrichtungsträger 2' in dieser vierten bevorzugten Ausführungsform zwei Schnittstellen 3, 3" auf, die jeweils zur Aufnahme und Energieversorgung einer Fügemittelaufbereitungseinrichtung ausgestaltet sind. Die erste Schnittstelle 3' ist dabei entsprechend der Schnittstelle 3, welche im Rahmen der ersten Ausführungsform beschrieben wurde, angeordnet. Die Schnittstelle 3" ist im Uhrzeigersinn um die Beschichtungsaggregatschnittstelle 7 anschließend an die erste Schnittstelle 3' angeordnet. Die Schnittstellen 3, 3" entsprechen dabei der Ausgestaltung der Schnittstelle 3, wie sie im Rahmen der ersten bevorzugten Ausführungsform beschrieben wurde.

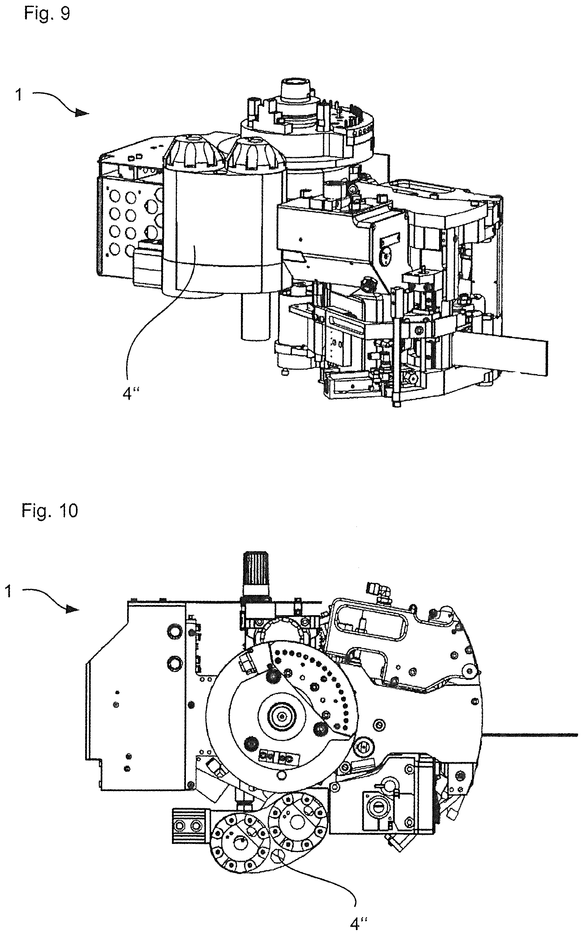

Das Beschichtungsaggregat 1 dieser vierten bevorzugten Ausführungsform ist ausgestaltet, die "Schmelzkleber-Fügetechnologie" und die "Laser-Fügetechnologie" bereitzustellen. Dabei weist Beschichtungsaggregat 1 eine Fügemittelaufbereitungseinrichtung 4' gemäß der Ausgestaltung, wie sie im Rahmen der ersten nicht erfinderischen Ausführungsform beschrieben wurde, welche mit der ersten Schnittstelle 3' verbunden ist, und eine Fügemittelaufbereitungseinrichtung 4" gemäß der Ausgestaltung auf, wie sie im Rahmen der dritten nicht erfinderischen Ausführungsform beschrieben wurde, welche mit der zweiten Schnittstelle 3" verbunden ist. Dabei sind der Strahlenaustritt 12 und die Schmelzkleberaustrittsöffnung 8 der Einrichtungen 4' und 4" bevorzugt so ausgestaltet und orientiert, dass die Aufbereitung des Kantenbands 6 für beide Technologien an gleicher beziehungsweise ähnlicher Position stattfindet. Zweite bevorzugte Ausführungsform Figs. 9 und 10 zeigen eine zweite bevorzugte Ausführungsform der vorliegenden Erfindung, welche mit Ausnahme der im Folgenden beschriebenen Unterschiede der ersten bevorzugten Ausführungsform entspricht.

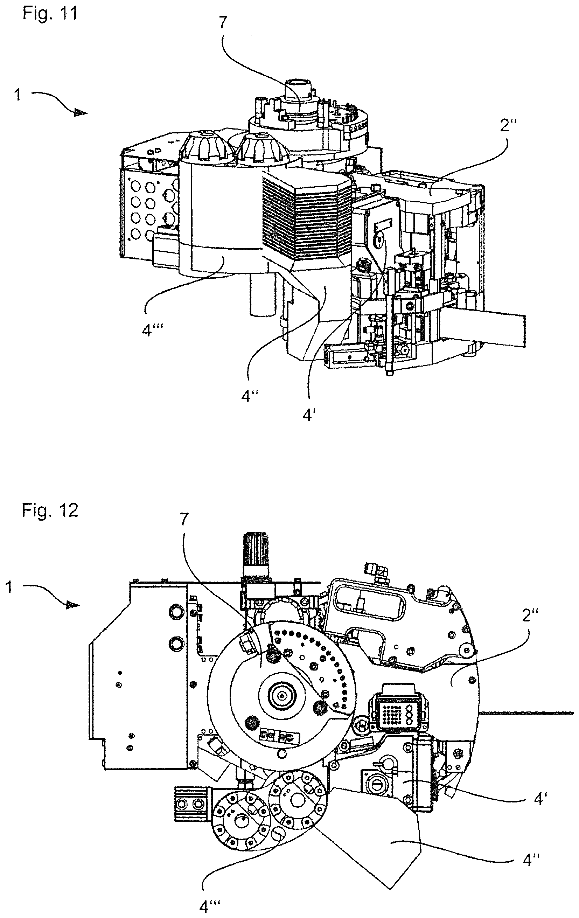

Im Unterschied zur ersten bevorzugten Ausführungsform ist die Fügemittelaufbereitungseinrichtung 4" der zweiten bevorzugen Ausführungsform ausgestaltet, die "Heißgas-Fügetechnologie" bereitzustellen. Die Fügemittelaufbereitungseinrichtung 4" ist dabei analog zu jener der zweiten nicht erfinderischen Ausführungsform ausgestaltet. Dritte bevorzugte Ausführungsform Figs. 11 und 12 zeigen eine dritte bevorzugte Ausführungsform der vorliegenden Erfindung. Mit Ausnahme der im Folgenden beschriebenen Unterschiede, entspricht die Ausgestaltung dieser dritten bevorzugten Ausführungsform jener der ersten nicht erfinderischen Ausführungsform.

Das Beschichtungsaggregat 1 dieser dritten Ausführungsform ist dabei ausgestaltet, alle drei zuvor beschriebenen Fügetechnologien, genauer gesagt, die "Schmelzkleber-Fügetechnologie", die "Laser-Fügetechnologie" sowie die "Heißgas-Fügetechnologie" bereitzustellen.

Der Einrichtungsträger 2" dieser dritten bevorzugten Ausführungsform weist im Vergleich zu den ersten drei nicht erfinderischen Ausführungsformen eine zweite und dritte Schnittstelle zur Aufnahme und Energieversorgung einer Fügemittelaufbereitungseinrichtung auf. Die Schnittstellen sind dabei analog zu jener der ersten Ausführungsform ausgestaltet. Dabei sind in dieser dritten bevorzugten Ausführungsform die drei Fügemittelaufbereitungseinrichtungen im Uhrzeigersinn um die Beschichtungsaggregatschnittstelle 7 in einer Reihengfolge angeordnet, sodass anschließend an die "Schmelzkleber-Fügetechnologie" Einrichtung 4', die "Laser-Fügetechnologie" Einrichtung 4" vor der "Heißgas-Fügetechnologie" Einrichtung 4'" angeordnet ist. Die einzelnen Einrichtungen 4, 4", 4'" sind dabei analog zu den entsprechenden Einrichtungen in den zuvor beschriebenen Ausführungsformen ausgestaltet. Ferner sind die Einrichtungen ausgestaltet beziehungsweise orientiert, sodass deren Austrittsöffnungen, genauer gesagt, die Schmelzkleberaustrittsöffnung, der Heißgasaustritt und der Strahlenaustritt im gleichen Bereich angeordnet sind, sodass die Aufbereitung des Kantenbands jeweils an gleicher beziehungsweise ähnlicher Position stattfindet.

## Patentansprüche

1. Beschichtungsaggregat (1) für eine Beschichtungsmaschine zum Beschichten von insbesondere platten- oder leistenförmigen Werkstücken, die bevorzugt zumindest abschnittsweise aus Holz, Holzwerkstoffen, Kunststoff oder dergleichen bestehen, mit einem Beschichtungsmaterial, **dadurch gekennzeichnet, dass**
das Beschichtungsaggregat (1) eine erste Schnittstelle (3') zur Aufnahme und Energieversorgung einer einwechselbaren Fügemittelaufbereitungseinrichtung, und
eine in die erste Schnittstelle (3') einwechselbare erste Fügemittelaufbereitungseinrichtung (4') aufweist, die eine Energiewandlungseinrichtung zum Wandeln der über die Schnittstelle (3') bereitgestellten Energie zur Aufbereitung eines Fügemittels zum Fügen des Beschichtungsmaterials (6) aufweist, wobei
das Aggregat (1) eine zweite Schnittstelle (3") zur Aufnahme und Energieversorgung einer einwechselbaren Fügemittelaufbereitungseinrichtung aufweist.

2. Beschichtungsaggregat (1) nach Anspruch 1, **dadurch gekennzeichnet, dass** das Aggregat (1) eine zweite in die zweite Schnittstelle (3', 3") einwechselbare zweite Fügemittelaufbereitungseinrichtung (4") aufweist, die eine Energiewandlungseinrichtung zum Wandeln der über die Schnittstelle (3, 3") bereitgestellten Energie zur Aufbereitung eines Fügemittels zum Fügen des Beschichtungsmaterials aufweist.

3. Beschichtungsaggregat (1) nach einem der vorhergehenden Ansprüche, **dadurch gekennzeichnet, dass** eine Fügemittelaufbereitungseinrichtung (4', 4") ein Haftmittelbehältnis zur Aufnahme eines Haftmittels und eine Auftragseinrichtung zum Auftragen des Haftmittels auf das Beschichtungsmaterial (6) und/oder die zu beschichtende Oberfläche des Werkstücks aufweist, und bevorzugt eingerichtet ist, das Haftmittel mittels der Energiewandlungseinrichtung zu aktivieren.

4. Beschichtungsaggregat (1) nach einem der vorhergehenden Ansprüche, **dadurch gekennzeichnet, dass** die erste und/oder ggf. zweite Fügemittelaufbereitungseinrichtung (4', 4") eingerichtet ist, eine durch Energieeintrag aktivierbare Funktionsschicht zum Fügen des Beschichtungsmaterials (6) an die zu beschichtenden Oberfläche des Werkstücks zu aktivieren.

5. Beschichtungsaggregat (1) nach einem der vorhergehenden Ansprüche, **dadurch gekennzeichnet, dass** die Energiewandlungseinrichtung der ersten und/oder ggf. zweiten Fügemittelaufbereitungseinrichtung (4', 4") mindestens eine Laserdiode zur Erzeugung eines Laserstrahls und bevorzugt eine Strahlführungs- und/oder Strahlformungseinrichtung für den Laserstrahl aufweist.

6. Beschichtungsaggregat (1) nach einem der vorhergehenden Ansprüche, **dadurch gekennzeichnet, dass** die Energiewandlungseinrichtung der ersten und/oder ggf. zweiten Fügemittelaufbereitungseinrichtung (4', 4") ein Heizsystem zur Erzeugung eines Heißgases und bevorzugt eine Düseneinrichtung für das Heißgas aufweist.

7. Beschichtungsaggregat (1) nach einem der vorhergehenden Ansprüche, **dadurch gekennzeichnet, dass** das Aggregat (1) ein Andrückelement (5) zum Andrücken des Beschichtungsmaterials (6) an die zu beschichtende Werkstückoberfläche aufweist.

8. Beschichtungsaggregat (1) nach einem der vorhergehenden Ansprüche, **dadurch gekennzeichnet, dass** das Aggregat (1) eine Beschichtungsaggregatschnittstelle (7) zum einwechselbaren Ankoppeln des Aggregat (1) an eine Beschichtungsmaschine aufweist.

9. Beschichtungsvorrichtung zum Beschichten von insbesondere platten- oder leistenförmigen Werkstücken, die bevorzugt zumindest abschnittsweise aus Holz, Holzwerkstoffen, Kunststoff oder dergleichen bestehen, mit einem Beschichtungsmaterial, wobei die Vorrichtung ein Beschichtungsaggregats (1) nach einem der Ansprüche 1 bis 8 aufweist, und ferner umfasst:
eine Zuführeinrichtung zum Zuführen eines
Beschichtungsmaterials zu einer zu beschichtenden Oberfläche des Werkstücks,
ein Andrückelement zum Andrücken des Beschichtungsmaterials an die zu beschichtende Oberfläche des Werkstücks,
eine Fördereinrichtung zum Herbeiführen einer Relativbewegung zwischen dem Andrückelement und der zu beschichtenden Werkstückoberfläche.

10. Beschichtungsvorrichtung nach Anspruch 9, **dadurch gekennzeichnet, dass** die Vorrichtung eine Wechseleinrichtung zum Rüsten des Beschichtungsaggregats (1) auf die erste und/oder zweite Fügemittelaufbereitungseirichtung (4', 4") und/oder zum Umrüsten des Aggregats (1) auf ein andere Fügemittelaufbereitungseinrichtung aufweist.

## Claims

1. Coating unit (1) for a coating machine for coating in particular board-like or strip-like workpieces which preferably in at least one section are made of wood, derived timber products, plastic or the like, with a coating material,
**characterised in that**
the coating unit (1) has a first interface (3') for receiving and supplying energy to an exchangeable device for preparing a joining agent, and
a first device (4') for preparing a joining agent which can be substituted in the first interface (3') and which has an energy conversion device for converting the energy provided via the interface (3') for preparing a joining agent for joining the coating material (6), wherein
the unit (1) has a second interface (3") for receiving and supplying energy to an exchangeable device for preparing a joining agent.

2. Coating unit (1) according to claim 1, **characterised in that** the unit (1) has a second device (4") for preparing a joining agent which can be inserted in the second interface (3', 3") and which has an energy conversion device for converting the energy provided via the interface (3', 3") for preparing a joining agent for joining the coating material.

3. Coating unit (1) according to any of the preceding claims, **characterised in that** a device (4', 4") for preparing a joining agent has an adhesive container for holding an adhesive and an applicator for applying the adhesive to the coating material (6) and/or the surface of the workpiece to be coated, and is preferably designed to activate the adhesive by means of the energy conversion device.

4. Coating unit (1) according to any of the preceding claims, **characterised in that** the first and/or, if occasion arises, second device (4', 4") for preparing a joining agent is designed to activate a function layer activatable by energy input for joining the coating material (6) to the surface of the workpiece to be coated.

5. Coating unit (1) according to any of the preceding claims, **characterised in that** the energy conversion device of the first and/or, if occasion arises, second device (4', 4") for preparing a joining agent has at least one laser diode for generating a laser beam and preferably a beam guiding and/or beam forming device for the laser beam.

6. Coating unit (1) according to any of the preceding claims, **characterised in that** the energy conversion device of the first and/or, if occasion arises, second device (4', 4") for preparing a joining agent has a heating system for generating a hot gas and preferably a nozzle device for the hot gas.

7. Coating unit (1) according to any of the preceding claims, **characterised in that** the unit (1) has a pressure-applying element (5) for pressing the coating material (6) against the workpiece surface to be coated.

8. Coating unit (1) according to any of the preceding claims, **characterised in that** the unit (1) has a coating unit interface (7) for exchangeable coupling of the unit (1) to a coating machine.

9. Coating apparatus for coating in particular board-like or strip-like workpieces which preferably in at least one section are made of wood, derived timber products, plastic or the like, with a coating material, wherein the apparatus has a coating unit (1) according to any of claims 1 to 8, and further comprises:
a feed device for feeding a coating material to a surface of the workpiece to be coated,
a pressure-applying element for pressing the coating material against the surface of the workpiece to be coated,
a conveying device for bringing about a relative movement between the pressure-applying element and the workpiece surface to be coated.

10. Coating apparatus according to claim 9, **characterised in that** the apparatus has an exchange device for mounting the coating unit (1) on the first and/or second device (4', 4") for preparing a joining agent and/or for converting the unit (1) to another device for preparing a joining agent.

## Revendications

1. Unité de revêtement (1) pour une machine de revêtement destinée au revêtement de pièces en particulier en forme de plaques ou de lattes, qui sont de préférence au moins en partie constituées de bois, de dérivés de bois, de plastique ou similaire, avec un matériau de revêtement,
**caractérisée en ce que** :
l'unité de revêtement (1) comporte une première interface (3') pour la réception et l'alimentation en énergie d'un dispositif interchangeable de préparation d'agent de fixation et
un premier dispositif de préparation d'agent de fixation (4') qui est interchangeable dans la première interface (3') et qui comporte un dispositif convertisseur d'énergie destiné à convertir l'énergie fournie par l'intermédiaire de l'interface (3') en vue de la préparation d'un agent de fixation destiné à la fixation du matériau de revêtement (6),
l'unité (1) comportant une seconde interface (3") pour la réception et l'alimentation en énergie d'un dispositif interchangeable de préparation d'agent de fixation.

2. Unité de revêtement (1) selon la revendication 1, **caractérisée en ce que** l'unité (1) comporte un second dispositif de préparation d'agent de fixation (4") qui est interchangeable dans la seconde interface (3', 3") et qui comporte un dispositif convertisseur d'énergie destiné à convertir l'énergie fournie par l'intermédiaire de l'interface (3', 3") en vue de la préparation d'un agent de fixation destiné à la fixation du matériau de revêtement.

3. Unité de revêtement (1) selon l'une quelconque des revendications précédentes, **caractérisée en ce qu'**un dispositif de préparation d'agent de fixation (4', 4") comporte un récipient d'agent adhésif destiné à recevoir un agent adhésif et un dispositif d'application destiné à appliquer l'agent adhésif sur le matériau de revêtement (6) et/ou sur la surface à revêtir de la pièce et est aménagé de préférence pour activer l'agent adhésif au moyen du dispositif convertisseur d'énergie.

4. Unité de revêtement (1) selon l'une quelconque des revendications précédentes, **caractérisée en ce que** le premier et/ou le cas échéant le second dispositif de préparation d'agent de fixation (4', 4") est ou sont aménagés pour activer une couche fonctionnelle activable par apport d'énergie en vue de la fixation du matériau de revêtement (6) à la surface à revêtir de la pièce.

5. Unité de revêtement (1) selon l'une quelconque des revendications précédentes, **caractérisée en ce que** le dispositif convertisseur d'énergie du premier et/ou le cas échéant du second dispositif de préparation d'agent de fixation (4', 4") comporte au moins une diode laser destinée à produire un rayon laser et de préférence un dispositif de mise en forme et/ou de guidage de rayon pour le rayon laser.

6. Unité de revêtement (1) selon l'une quelconque des revendications précédentes, **caractérisée en ce que** le dispositif convertisseur d'énergie du premier et/ou le cas échéant du second dispositif de préparation d'agent de fixation (4', 4") comporte un système de chauffage destiné à produire un gaz chaud et de préférence un dispositif à buse pour le gaz chaud.

7. Unité de revêtement (1) selon l'une quelconque des revendications précédentes, **caractérisée en ce que** l'unité (1) comporte un élément presseur (5) pour presser le matériau de revêtement (6) contre la surface de la pièce à revêtir.

8. Unité de revêtement (1) selon l'une quelconque des revendications précédentes, **caractérisée en ce que** l'unité (1) comporte une interface d'unité de revêtement (7) destinée au couplage interchangeable de l'unité (1) à une machine de revêtement.

9. Dispositif de revêtement destiné au revêtement de pièces en particulier en forme de plaques ou de lattes, qui sont de préférence au moins en partie constituées de bois, de dérivés de bois, de plastique ou similaire, avec un matériau de revêtement,
lequel dispositif comporte une unité de revêtement (1) selon l'une quelconque des revendications 1 à 8 et comprend en outre :
- un dispositif d'amenée destiné à amener un matériau de revêtement jusqu'à une surface à revêtir de la pièce,
- un élément presseur destiné à presser le matériau de revêtement contre la surface à revêtir de la pièce,
- un dispositif de transport destiné à exécuter un déplacement relatif entre l'élément presseur et la surface de la pièce à revêtir.

10. Dispositif de revêtement selon la revendication 9, **caractérisé en ce que** le dispositif comporte un dispositif de changement destiné à équiper l'unité de revêtement (1) avec le premier et/ou le second dispositif de préparation d'agent de fixation (4', 4") et/ou à rééquiper l'unité (1) avec un autre dispositif de préparation d'agent de fixation.
